(19) Europäisches Patentamt
European Patent Office
Office européen des brevets

(11) **EP 2 199 788 B1**

(12) **EUROPEAN PATENT SPECIFICATION**

(45) Date of publication and mention
of the grant of the patent:
**14.08.2019 Bulletin 2019/33**

(51) Int Cl.:
***G01N 29/14*** *(2006.01)*     ***G01N 29/24*** *(2006.01)*
***G01N 3/32*** *(2006.01)*     ***G01N 29/04*** *(2006.01)*
***G01N 29/44*** *(2006.01)*

(21) Application number: **09179662.3**

(22) Date of filing: **17.12.2009**

(54) **Method and apparatus for montoring structural health**

Verfahren und Vorrichtung zur strukturellen Integritätsüberwachung

Procédé et appareil de surveillance de la santé structurelle

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.12.2008 US 337848**

(43) Date of publication of application:
**23.06.2010 Bulletin 2010/25**

(73) Proprietor: **Sikorsky Aircraft Corporation**
**Stratford, CT 06615 (US)**

(72) Inventors:
• **Ghoshal, Anindya**
**Middletown, CT 06457 (US)**
• **Zangor, Roxana**
**Candiac, Québec J5R 6R4 (CA)**
• **Chaudhry, Zaffir A.**
**South Glastonbury, CT 06073 (US)**
• **Yeh, Jimmy Lih-Min**
**West Hartford, CT 06110 (US)**
• **Schaff, Jeffrey R.**
**North Haven, CT 06473 (US)**
• **Davis, Mark W.**
**Southbury, CT 06488 (US)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
WO-A1-2006/005960     US-A1- 2006 069 520
US-A1- 2008 167 833     US-B2- 7 286 964

**Description**

**BACKGROUND**

This application relates to structural health management, and more particularly to a method for monitoring a health of a structure.

Rotary-wing aircraft and other structures may be routinely subjected to operational conditions which may result in stress and vibration. Since the components of the structure may have a measurable and predictable life cycle, prediction of component deterioration so as to anticipate a potential failure facilitates prolonged operations. Early detection of potential failures or fractures within a structural component provides the ability to perform preventative maintenance and avoid potential component failure.

Manual inspection is one method of monitoring structural health. More recently, some aircraft have incorporated Health and Usage Monitoring Systems ("HUMS") to monitor the health of critical components and collect operational flight data utilizing on-board accelerometers, sensors, and avionic systems.

WO 2006/005960 A1 discloses a method and system is disclosed for detecting structural damage in a structure by detecting acoustic emissions from damage in a structure to obtain acoustic emission data, and processing the acoustic emission data in accordance with a model characterizing acoustic paths involving inducing acoustic emissions by a simulation mechanism at a plurality of positions and detected by at least three sensors arranged on the structure.

US 2006/0069520 A1 discloses a structure health monitoring ("SHM") system deployable in an onboard environment, such as an aircraft, to provide an ongoing damage assessment of structural components on the aircraft. Its SHM system purports to reduce or eliminate time consuming and costly manual inspections of aircraft, being able to leverage known sensor technologies to collect sensor data indicative of the structural health of the monitored components. The sensor data is processed and baselined with sensor feature baselines and damage estimate baselines to provide an accurate final damage estimate for the monitored component. The final damage estimate can be further processed or formatted for compatibility with aircraft maintenance systems.

US 2008/0167833 A1 discloses methods and systems for structural and component health monitoring, with a system including a plurality of sensor systems positioned about an object to be monitored and a processing system communicatively coupled to at least one of said plurality of sensor systems wherein the processing system includes an ontology and reasoning module configured to model the object to be monitored, reason about the received sensor data associated with the object to be monitored and reason about the relationships between the received sensor data to fuse the data into contextual information for the overall object to be monitored and a contextual analyzer configured to transmit the received sensor data to said ontology and reasoning module and to store the information into a contextual information database.

U.S. 7,286,964 discloses a methods and recordable media for monitoring structural health conditions, providing a method for interrogating a damage of a host structure using a diagnostic network patch (DNP) system having patches. Its interrogation module partitions the plurality of patched in subgroups and measures the sensor signals generated and received by actuator and sensor patches, respectively. Then, its process module loads sensor signal data to identify Lamb wave modes, determine the time of arrival of the modes and generate a tomographic image, then also determine distribution of other structural condition indices to generate tomographic images of the host structure. A set of tomographic images can be stacked to generate a hyperspectral tomography cube. Its classification module generates codebook based on K-mean/Learning Vector Quantization algorithm and uses a neural-fuzzy-inference system to determine the type of damages of the host structure.

The invention overcomes at least some of the deficiencies of the art with the solutions recited in the attached independent claim and dependent claims.

The invention is defined by the method according to claim 1. Optional features are defined in the dependent claims.

These and other features of the present application can be best understood from the following specification and drawings, the following of which is a brief description.

**BRIEF DESCRIPTION OF THE DRAWINGS**

Figure 1 schematically illustrates in block diagram form one structural health monitoring flowchart.

Figure 2a illustrates a first view of an example structure.

Figure 2b illustrates a second view of the structure of Figure 2a.

Figure 3 schematically illustrates a multitude of sensors applied to the structure of Figures 2a, 2b.

Figure 4 schematically illustrates a system for structural health monitoring.

Figure 5 schematically illustrates a plurality of damage monitoring actions.
Figure 6 schematically illustrates in block diagram another structural health monitoring flowchart.
Figure 7 schematically illustrates a crack size estimate decision flowchart.

## DETAILED DESCRIPTION OF THE EXEMPLARY EMBODIMENTS

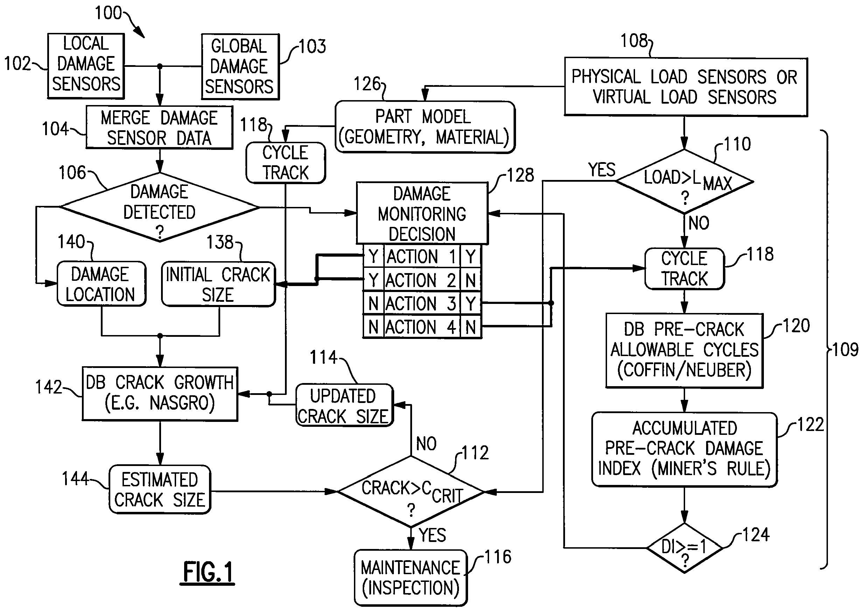

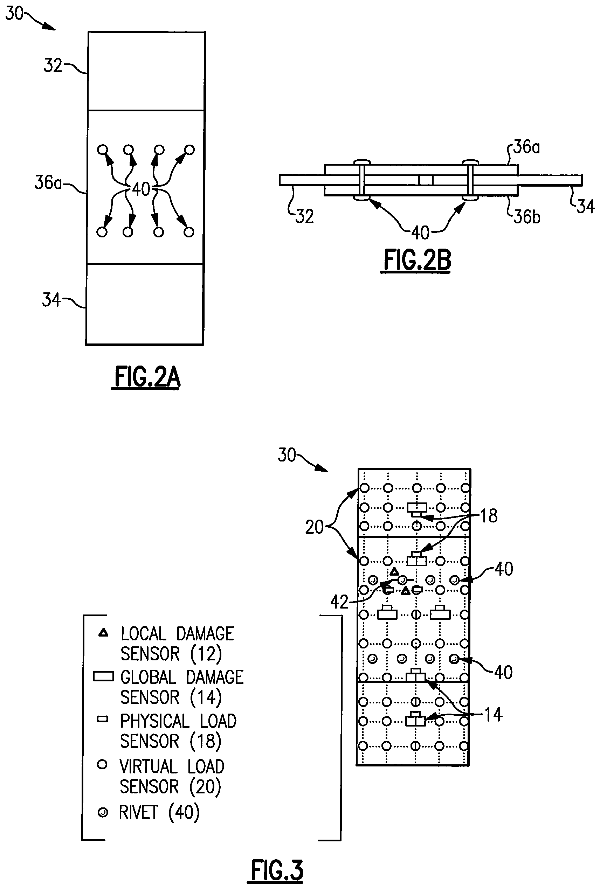

Figure 1 schematically illustrates one non-limiting embodiment of a method 100 of monitoring a health of a structure 30 (see Figures 2a, 2b). The method 100 may be utilized to analyze the health of various structures, such as, for example only, an airframe. The structure 30 may include a first component 32, a second component 34, a first connecting component 36a, a second connecting component 36b, and a plurality of fasteners 40 to secure the components 32, 34, 36a, 36b together. In one example the fasteners are rivets. It is understood that Figures 2a and 2b, and 3 are exemplary, and that other structures could be analyzed and that other fasteners could be used.

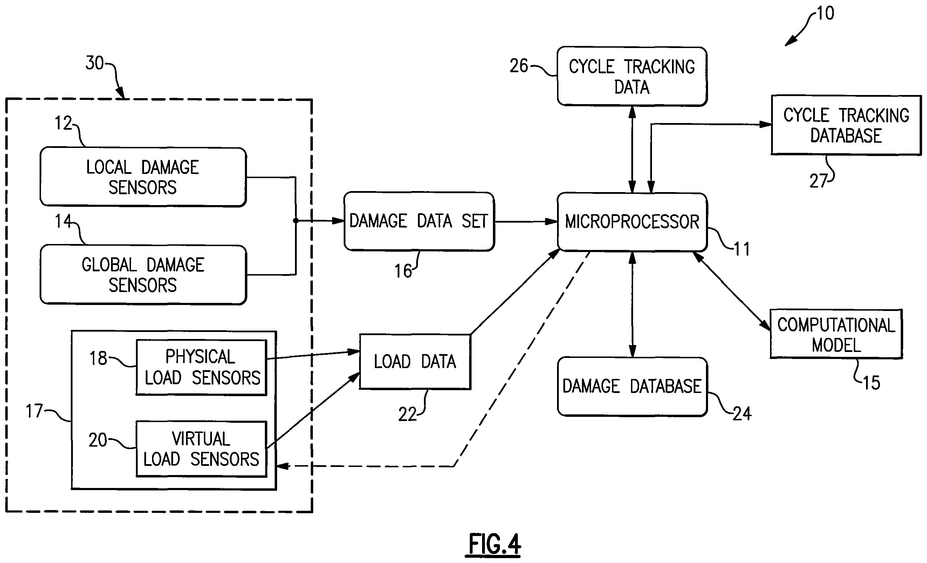

A multitude of local damage sensors 12 and a multitude of global damage sensors 14 are applied to the structure 30 (see Figures 3, 4). A damage sensor is any device that can either sense a deviation in a structure from its original configuration or that can produce a signal that can be used to sense the deviation in the structure from its original configuration. In one example, the local damage sensors 12 are applied to areas on the structure where damage is likely to occur, or "hot spots," where a crack 42 has occurred either during testing or during actual operational conditions (e.g. from a helicopter fleet history). In one example the local damage sensors are either ultrasonic sensors, phase data sensors, or crack gauges. As shown in Figure 3, the second quantity of global damage sensors 14, such as piezo sensors, is greater than the first quantity of local damage sensors 12. The global damage sensors 14 may be applied uniformly to a large area of the structure 30 to form a sensor network. The virtual load sensors 20, possibly in combination with the physical load sensors 18, may also be configured to form a sensor network.

Data is received from the multitude of local damage sensors 12 (action 102) and data is received from the multitude of global damage sensors 14 (action 103). The local sensor data and global sensor data is then merged (action 104) to form a damage data set 16 (Figure 4). A first damage prediction (action 106) is performed in response to the damage data set 16. The first damage prediction 106 may include using software to process the damage data set 16 to determine if any damage such as a crack has formed in the structure 30. In one example, software may be used to compare the damage data set 16 to predicted sensor data for a cracked or damaged structure. It is understood that the term "damage prediction" includes both detecting damage from actual operational condition data (e.g. from a helicopter fleet history), and also predicting damage from test data.

An initial crack size estimate (action 138) and a damage location estimate (action 140) are performed in response to the first damage prediction (action 106). The initial crack size estimate (action 138) may be calculated using data from the damage data set 16 or from a damage database 24, which contains data regarding crack sizes and other criteria (see Figure 4). The damage database 24 may contain data, such as global stress amplitude, global stress history, crack length, axial stress amplitude distribution, transverse stress amplitude distribution, as well as alternative or additional data, to classify a crack. In one example, the damage database 24 is populated with data based upon measured, experimental data in the particular component 30.

Load data 22 is also received from a multitude of load sensors (action 108). A load sensor is any device for sensing loads in a structure. In one non-limiting embodiment, the load sensors 17 are physical load sensors 18, such as accelerometers or bi-directional strain gauges, applied to the structure 30 (see Figures 3, 4). In another non-limiting embodiment, the load sensors 17 are virtual sensors 20 that correspond to a computational model 15 for estimating an applied load based on state parameters, such as aircraft altitude, aircraft velocity, etc. (see Figures 3, 4). While it is possible to use physical load sensors 18 and virtual load sensors 20 simultaneously, it should be understood that both types of load sensors need not be required.

A second damage prediction (action 109) is performed in response to the load data 22 from the load sensors 17 (see Figure 4). A check is performed to determine if a sensed load exceeds a maximum allowable load ("Lmax") for the structure (action 110). If the sensed load exceeds the maximum allowable load, it is determined that the structure 30 has been damaged, and an estimated crack size 144 is compared to a critical crack size for the structure (action 112). If the estimated crack size does not exceed the critical crack size ("Ccrit"), it may be determined that the structure 30 is still usable, but the estimated crack size 144 is updated (action 114). If the estimated crack size does exceed the critical crack size, it is determined that the structure 30 should be inspected, and a maintenance request, such as an inspection flag, is triggered (action 116).

If the sensed load does not exceed the maximum allowable load for the structure (action 110), a cycle count for a stress level is incremented in response to the structure experiencing oscillations at the stress level (action 118). It is understood that in this application the term "oscillations" can include vibratory loads and can include dynamic loads. Incrementing the cycle count includes obtaining cycle tracking data 26 from memory, and then updating the cycle tracking data 26 (see Figure 4). Storing cycle tracking data 26 in memory allows cycle tracking data to be retained from previous occasions so that cycle tracking (action 118) is cumulative. In one example cycle tracking data is maintained and tracked in a ground station. A ratio of an experienced number of cycles to a predetermined maximum allowable number of cycles for a stress level is then calculated (action 120). In one non-limiting embodiment the maximum allowable number of cycles is determined using Neuber's rule (equation #1 below) and the Basquin-Coffin rule (equation #2 below). In one non-limiting embodiment, equations #1 and 2 may be used to populate a cycle tracking database 27 so that a maximum number of allowable cycles for a stress level may be retrieved from memory.

$$\frac{K_f{}^2 \Delta\sigma_{nom}}{2}\left[\frac{\Delta\sigma_{nom}}{2E}+\left(\frac{\Delta\sigma_{nom}}{2K}\right)^{\frac{1}{n}}\right]=\frac{\Delta\sigma^2}{4E}+\frac{\Delta\sigma}{2}\left(\frac{\Delta\sigma}{2K}\right)^{\frac{1}{n}} \qquad \text{[equation \#1]}$$

where $K_f$ is a fatigue notch factor;
$\Delta\sigma_{nom}$ is a nominal stress range;
E is a modulus of elasticity;
$\Delta\sigma$ is a local stress range; and
K and n are parameters of a non-linear stress-strain relation.

$$\frac{\Delta\varepsilon}{3}=\frac{\sigma_f}{E}\left(2N_f\right)^b+\varepsilon_f\left(2N_f\right)^c \qquad \text{[equation \#2]}$$

where $\Delta\varepsilon$ is a total strain amplitude in a notch root;
$\sigma_f$ is a fatigue stress coefficient;
$\varepsilon_f$ is a fatigue ductility coefficient;
Nf is a number of remaining cycles until a crack initiation occurs; and
b and c are fatigue stress exponents.

Equations #3 and #4 shown below illustrate how equations #1 and #2 are related, and may be used along with equations #1 and #2

$$K=\frac{\sigma_f}{\left(\varepsilon_f\right)^n} \qquad \text{[equation \#3]}$$

$$n=\frac{b}{c} \qquad \text{[equation \#4]}$$

A sum of the ratios for each of the stress levels is then calculated (action 122; for example by Miner's rule) to obtain a cumulative damage index "DI". A check is then performed to determine if the cumulative damage index meets or exceeds a threshold (action 124). While action 124 illustrates an example threshold of 1, it is understood that other thresholds could be used. The second damage prediction 109 includes actions 110, 118, 120, 122, and 124 (Figure 1). If the load sensors 17 correspond to virtual load sensors 20, it may be necessary to retrieve information about the structure, such as geometry and material information of the structure (action 126).

Referring to Figure 4, a system 10 for structural health monitoring is schematically illustrated. The system 10 generally includes a microprocessor 11, a computational model 15, a damage data set 16, a load data 22, a damage database 24, cycle tracking data 26, and cycle tracking database 27. In one example the computational model 15 includes a damage model corresponding to the damage sensors 12, 14 and a load model corresponding to the load sensors 17. The computational model 15 and the microprocessor 11 may be part of a HUMS application or another on-board application where sensor data is processed in real-time. Also, the computational model 15 and the microprocessor 11 may also be part of an offline application where sensor data is downloaded and processed after being recorded. The microprocessor 11 may be part of a computer. In one example the computational model 15, damage data set 16, load data 22, damage database 24, cycle tracking data 26, and cycle tracking database 27 are stored in memory that is in communication with the microprocessor 11. The memory may, for example only, include UVPROM, EEPROM, FLASH, RAM, ROM, DVD, CD, a hard drive, or other computer readable medium which stores the data. The microprocessor 11 is operable to receive data from a computational model 15, to update the computational model 15 in response to the damage data set 16 and the load data 22, and to interact with the computational model 15 to provide the virtual load sensors 20. The microprocessor 11 is operable to receive and process the damage data set 16 and the load data 22, and is operable to perform the actions illustrated in the method 100 (Figure 1).

It should be noted that a computing device can be used to implement various functionality of the computational model, such as that attributable to the system 10. In terms of hardware architecture, such a computing device may include the microprocessor 11, memory (as described above), and one or more input and/or output (I/O) device interface(s) that are communicatively coupled via a local interface. The local interface may include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The microprocessor 11 may be a hardware device for executing software, particularly software stored in memory. The microprocessor may be a custom made or commercially available processor, a central processing unit (CPU), an auxiliary processor among several processors associated with the computing device, a semiconductor based microprocessor (in the form of a microchip or chip set) or generally any device for executing software instructions.

The memory may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory may also have a distributed architecture, where various components are situated remotely from one another, but may be accessed by the processor.

The software in the memory (e.g. the computational model 15) may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the computing device is in operation, the microprocessor 11 may be configured to execute software stored within the memory, to communicate data to and from the memory, and to generally control operations of the computing device pursuant to the software. Software in memory, in whole or in part, is read by the processor, perhaps buffered within the processor, and then executed.

In one example, the damage sensors 12 and 14 corresponds to a first tier of a structural health monitoring architecture, the load sensors 17 correspond to a second tier of the structural health monitoring architecture, and the computational model 15 corresponds to a third tier of the structural health monitoring architecture.

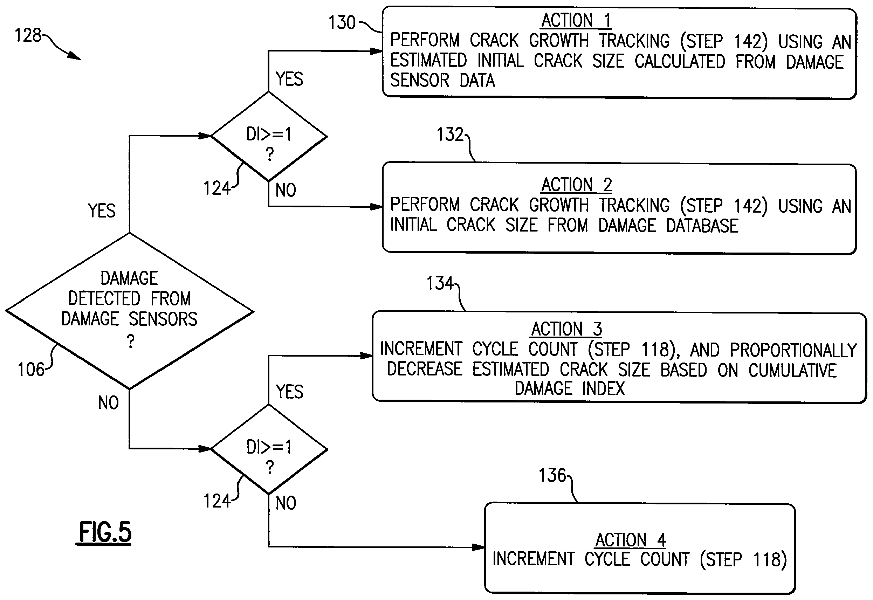

Referring to Figure 5, a damage monitoring decision is performed (action 128) in response to the first damage prediction (action 106) and the second damage prediction (action 109). One of four damage monitoring actions (130, 132, 134, 136) may performed in response to the damage monitoring action decision 128 (see Figures 1, 5). However, it is understood that the damage monitoring actions (130, 132, 134, 136) are exemplary, and that alternative or additional damage monitoring actions would be possible.

If the first damage prediction (action 106) detects damage and the second damage prediction (action 109) detects damage, the first damage monitoring action (action 130) is performed. The first damage monitoring action includes performing crack growth tracking (action 142) using an initial crack size estimate (action 138) calculated from the damage data set 16. In one example the crack growth tracking (action 142) may be performed using the NASGRO equation. In another example, the crack growth tracking may be performed using finite element analysis software.

If the first damage prediction (action 106) detects damage and the second damage prediction (action 109) does not detect damage, a second damage monitoring action (action 132) is performed. The second damage monitoring action includes performing crack growth tracking (action 142) using an initial crack size estimate (action 136) from a damage database 24 (see Figure 4).

If the first damage prediction (action 106) does not detect damage and the second damage prediction (action 109) detects damage, then a third damage monitoring action (action 134) is performed. The third damage monitoring action includes incrementing a cycle count (action 118) for a stress level in response to the structure experiencing oscillations at the stress level, and proportionally decreasing an estimated crack size (action 144) based on the cumulative damage index.

If the first damage prediction (action 106) does not detect damage and the second damage prediction (action 109) does not detect damage, then it may be determined that the structure 30 has not experienced damage, and a fourth damage monitoring action (action 136) is performed. The fourth damage monitoring action includes incrementing a cycle count (action 118) for a stress level in response to the structure experiencing oscillations at the stress level.

As discussed above, an estimated crack growth size 144 is compared to a critical crack size for the structure (action 112), and if the estimated crack size does not exceed the critical crack size, then it may be determined that the structure is still healthy, and the estimated crack size is updated (action 114). If the estimated crack size does exceed the critical crack size, the system 10 determines that the structure requires maintenance, and a maintenance request, such as an inspection flag, is triggered (action 116).

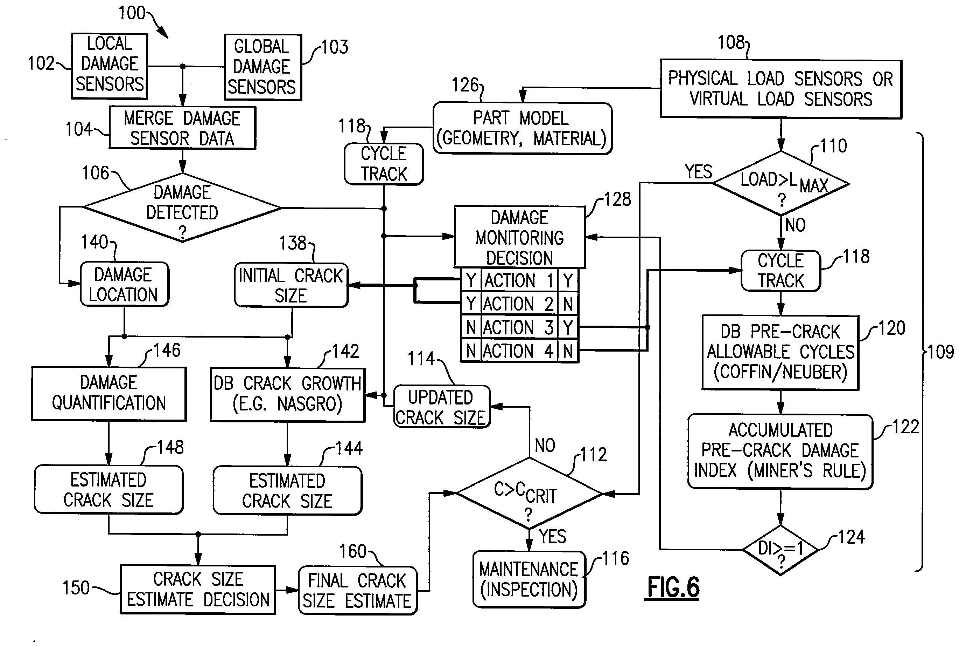

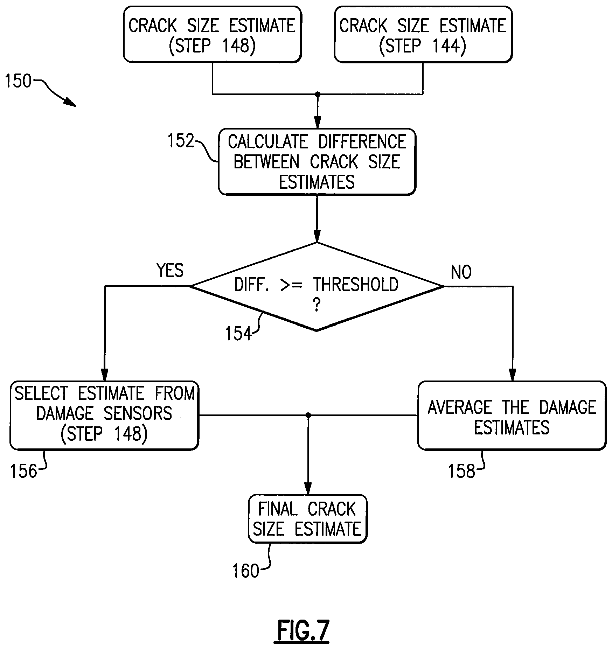

Figure 6 schematically illustrates another non-limiting embodiment of a method 101 of monitoring a health of a structure. In this embodiment, a damage quantification estimate (action 146) and crack size estimate (action 148) are performed in response to the first damage prediction (action 106) detecting damage. A crack size estimate decision (action 150) is performed in response to the crack size estimates (actions 144, 148). Figure 7 schematically illustrates an example crack size estimate decision 150. A difference between the crack size estimates is calculated (action 152), and the difference is compared to a threshold (action 154). If the difference meets or exceeds the threshold, then the crack size estimate from action 148 is selected as a final crack size estimate (action 160). If the difference is less than the threshold, then the crack size estimates from actions 144 and 148 are averaged to produce the final crack estimate (action 160).

Although preferred embodiments of this application have been disclosed, these embodiments are only exemplary, and a worker of ordinary skill in this art would recognize that certain modifications would come within the scope of this application. For that reason, one should study the following claims to determine the true scope and content of this invention.

**Claims**

1. A method comprising:

    performing a first damage prediction with a computational model using at least data from a multitude of damage sensors mounted to a structure (30), the multitude of damage sensors including a multitude of local damage sensors applied to the structure (30) and a multitude of global damage sensors applied to the structure (30), the damage sensors being configured to sense a deviation in a structure (30) from its original configuration and/or produce a signal that can be used to sense the deviation;
    performing a second damage prediction with the computational model using at least data from a multitude of load sensors (17) associated with the structure (30), the multitude of load sensors (17) including at least one of physical load sensors (18) mounted to the structure (30) and configured to sense loads in a structure (30) or virtual load sensors (20) corresponding to a computational model associated with the structure (30) and configured to estimate an applied load based on state parameters;
    selectively performing a damage monitoring action in response to the first damage prediction and the second damage prediction to determine a structural health;
    identifying areas on the structure (30) where damage is likely to occur under operational conditions;
    mounting a first quantity of the multitude of local damage sensors to the areas where damage is likely to occur; and
    mounting a second quantity of the multitude of global damage sensors to a plurality of locations on a large area of the structure (30), the second quantity being greater than the first quantity.

2. The method of claim 1, further comprising:
    predicting a structural health of the structure (30) in response to the first damage prediction and the second damage prediction, the structural health including at least one of a comparison of a cumulative damage index to a predetermined threshold, a comparison of an estimated crack size to a critical crack size, and a comparison of an experienced number of cycles to a maximum allowable number of cycles

3. The method of claim 1 or 2, further comprising:
    updating the computational model on a computer using at least the data from the first multitude of load sensors (17) and using the data from the second multitude of damage sensors, wherein the computational model is stored in memory on a computer.

4. The method of any of claims1 to 3, further comprising:

    receiving data from the multitude of damage sensors; and

merging data from the multitude of local damage sensors and the multitude of global damage sensors to form a damage data set stored in memory in communication with the computer.

5. The method of any of claims 1 to 4, further comprising: receiving data from the second multitude of load sensors 17, the second multitude of load sensors (17) including at least the physical load sensors (18).

6. The method of any of claims 1 to 5, wherein said performing a first damage prediction comprises:

   processing the data from the multitude of damage sensors; and
   determining if a crack has formed on the structure (30) using the processed data.

7. The method of any of claims 1 to 6, wherein said performing a second damage prediction comprises:

   processing the data from the multitude of load sensors (17); and
   determining if a sensed load sensed by the multitude of load sensors (17) exceeds a maximum load for the structure (30).

8. The method of any of claims 1 to 7, wherein said performing a second damage prediction further comprises:

   calculating a cumulative damage index in response to a sensed load which does not exceed a maximum load; and
   determining if the cumulative damage index is greater than or equal to a threshold value.

9. The method of claim 8, wherein said calculating a cumulative damage index comprises:

   incrementing a cycle count number for a stress level in response to identification that the structure (30) experienced oscillations at the stress level;
   calculating a ratio of an experienced number of cycles to a predetermined maximum allowable number of cycles for each stress level experienced by the structure (30); and
   calculating a sum of the ratios for each of the stress levels to calculate a cumulative damage index.

10. The method of any of claims 1 to 9, wherein said selectively performing a damage monitoring action includes estimating an initial crack size calculated from data received from the damage sensors and tracking crack growth tracking in response to the initial crack size if the first damage prediction predicts damage and the second damage prediction predicts damage.

11. The method of any of claims 1 to 10, wherein said selectively performing a damage monitoring action includes tracking crack growth and referencing an initial crack size from a damage database if the first damage prediction predicts damage and the second damage prediction does not predict damage.

12. The method of any of claims 1 to 11, wherein said selectively performing a damage monitoring action further comprises:

   incrementing a cycle count number for a stress level in response to the structure (30) experiencing oscillations at the stress level if the first damage prediction does not detect predict and the second damage prediction predicts damage; and
   proportionally decreasing an estimated crack size based on a cumulative damage index if the first damage prediction does not detect predict and the second damage prediction predicts damage.

13. The method of any of claims 1 to 12, wherein said selectively performing a damage monitoring action further comprises: incrementing a cycle count number for a stress level in response to the structure (30) experiencing oscillations at the stress level if the first damage prediction does not predict damage and the second damage prediction does not predict damage.

14. The method of any of claims 1 to 13, further comprising:

   performing a first crack size estimate by referencing a damage database in response to the first damage prediction predicting damage;
   performing a second crack size estimate based on data from the multitude of damage sensors in response to the first damage prediction predicting damage;
selecting the second crack size estimate as a final crack size estimate if a difference between the first crack size estimate and the second crack size estimate exceeds a threshold; and
selecting an average of the first crack size estimate and the second crack size as a final crack estimate if a difference between the first crack size estimate and the second crack size estimate does not exceed a threshold.

**Patentansprüche**

1. Verfahren, Folgendes umfassend:

   Durchführen einer ersten Schadensvorhersage mit einem Berechnungsmodell unter Verwendung von mindestens Daten von einer Vielzahl von Schadenssensoren, die an einer Struktur (30) montiert sind, wobei die Vielzahl von Schadenssensoren eine Vielzahl lokaler Schadenssensoren, die auf der Struktur (30) aufgebracht sind, und eine Vielzahl globaler Schadenssensoren, die auf der Struktur (30) angebracht sind, beinhaltet, wobei die Schadenssensoren dazu konfiguriert sind, eine Abweichung einer Struktur (30) von ihrer normalen Konfiguration zu erfassen und/oder ein Signal zu erzeugen, das dazu verwendet werden kann, die Abweichung zu erfassen;
   Durchführen einer zweiten Schadensvorhersage mit dem Berechnungsmodell unter Verwendung von mindestens Daten von einer Vielzahl von Lastsensoren (17), die der Struktur (30) zugeordnet sind, wobei die Vielzahl von Lastsensoren (17) mindestens eines von physischen Lastsensoren (18), die an der Struktur (30) montiert und dazu konfiguriert sind, Lasten in einer Struktur (30) zu erfassen, oder virtuellen Lastsensoren (20), die einem Berechnungsmodell entsprechen, das der Struktur (30) zugeordnet ist, und dazu konfiguriert sind, eine aufgebrachte Last basierend auf Zustandsparametern zu schätzen, beinhalten;
   selektives Durchführen eines Schadensüberwachungsvorgangs als Reaktion auf die erste Schadensvorhersage und die zweite Schadensvorhersage, um eine strukturelle Integrität zu bestimmen;
   Identifizieren von Bereichen an der Struktur (30), wo es wahrscheinlich ist, dass unter Betriebsbedingungen Schäden auftreten;
   Montieren einer ersten Anzahl der Vielzahl von lokalen Schadenssensoren an den Bereichen, wo es wahrscheinlich ist, dass Schäden auftreten; und
   Montieren einer zweiten Anzahl der Vielzahl von globalen Schadenssensoren an einer Mehrzahl von Stellen an einem großen Bereich der Struktur (30), wobei die zweite Anzahl größer als die erste Anzahl ist.

2. Verfahren nach Anspruch 1, ferner umfassend:
   Vorhersagen einer strukturellen Integrität der Struktur (30) als Reaktion auf die erste Schadensvorhersage und die zweite Schadensvorhersage, wobei die strukturelle Integrität mindestens eines von einem Vergleich eines kumulativen Schadensindex mit einem vorbestimmten Schwellenwert, einem Vergleich einer geschätzten Rissgröße mit einer kritischen Rissgröße und einem Vergleich einer durchlaufenen Anzahl von Zyklen mit einer maximal zulässigen Anzahl von Zyklen beinhaltet.

3. Verfahren nach Anspruch 1 oder 2, ferner umfassend:
   Aktualisieren des Berechnungsmodells auf einem Computer unter Verwendung von mindestens den Daten von der ersten Vielzahl von Lastsensoren (17) und unter Verwendung von Daten von der zweiten Vielzahl von Schadenssensoren, wobei das Berechnungsmodell im Speicher eines Computers gespeichert ist.

4. Verfahren nach einem der Ansprüche 1 bis 3, ferner umfassend:

   Empfangen von Daten von der Vielzahl von Schadenssensoren; und
   Zusammenführen von Daten von der Vielzahl lokaler Schadenssensoren und der Vielzahl globaler Schadenssensoren, um einen Schadensdatensatz zu bilden, der im Speicher in Kommunikation mit dem Computer gespeichert ist.

5. Verfahren nach einem der Ansprüche 1 bis 4, ferner umfassend:
   Empfangen von Daten von der zweiten Vielzahl von Lastsensoren (17), wobei die zweite Vielzahl von Lastsensoren (17) mindestens die physischen Lastsensoren (18) beinhaltet.

6. Verfahren nach einem der Ansprüche 1 bis 5, wobei das Durchführen der ersten Schadensvorhersage Folgendes umfasst:

Verarbeiten der Daten von der Vielzahl von Schadenssensoren; und
Bestimmen, ob sich ein Riss an der Struktur (30) gebildet hat, unter Verwendung der bearbeiteten Daten.

7. Verfahren nach einem der Ansprüche 1 bis 6, wobei das Durchführen einer zweiten Schadensvorhersage Folgendes umfasst:

Verarbeiten der Daten von der Vielzahl von Lastsensoren (17); und
Bestimmen, ob eine erfasste Last, die von der Vielzahl von Lastsensoren (17) erfasst wurde, eine Höchstlast für die Struktur (30) übersteigt.

8. Verfahren nach einem der Ansprüche 1 bis 7, wobei das Durchführen einer zweiten Schadensvorhersage ferner Folgendes umfasst:

Berechnen eines kumulativen Schadensindex als Reaktion auf eine erfasste Last, welche die Höchstlast nicht übersteigt; und
Bestimmen, ob der kumulative Schadensindex größer oder gleich einem Schwellenwert ist.

9. Verfahren nach Anspruch 8, wobei das Berechnen eines kumulativen Schadensindex Folgendes umfasst:

Inkrementieren einer Zykluszahlanzahl für ein Belastungsniveau als Reaktion auf die Identifikation, dass die Struktur (30) Schwankungen auf dem Belastungsniveau erfahren hat;
Berechnen eines Verhältnisses einer durchlaufenen Anzahl von Zyklen mit einer zulässigen Höchstanzahl von Zyklen für jedes Belastungsniveau, das die Struktur (30) erfährt; und
Berechnen einer Summe der Verhältnisse für jedes der Belastungsniveaus, um einen kumulativen Schadensindex zu berechnen.

10. Verfahren nach einem der Ansprüche 1 bis 9, wobei das selektive Durchführen eines Schadensüberwachungsvorgangs beinhaltet, eine anfängliche Rissgröße zu schätzen, die berechnet aus Daten wird, die von den Schadenssensoren empfangen werden, und Verfolgen des Wachstums des Risses als Reaktion auf die anfängliche Rissgröße, wenn die erste Schadensvorhersage Schaden vorhersagt und die zweite Schadensvorhersage Schaden vorhersagt.

11. Verfahren nach einem der Ansprüche 1 bis 10, wobei das selektive Durchführen eines Schadensüberwachungsvorgangs das Verfolgen des Risswachstums und die Bezugnahme auf eine anfängliche Rissgröße aus einer Schadensdatenbank beinhaltet, wenn die erste Schadensvorhersage Schaden vorhersagt und die zweite Schadensvorhersage keinen Schaden vorhersagt.

12. Verfahren nach einem der Ansprüche 1 bis 11, wobei das selektive Durchführen eines Schadensüberwachungsvorgangs ferner Folgendes umfasst:

Inkrementieren einer Zykluszahlanzahl für ein Belastungsniveau als Reaktion darauf, dass die Struktur (30) Schwankungen auf dem Belastungsniveau erfährt, wenn die erste Schadensvorhersage keine Vorhersage erfasst und die zweite Schadensvorhersage Schaden vorhersagt; und
proportionales Reduzieren einer geschätzten Rissgröße basierend auf einem kumulativen Schadensindex, wenn die erste Schadensvorhersage keine Vorhersage erfasst und die zweite schadensvorhersage Schaden vorhersagt.

13. Verfahren nach Anspruch 1 bis 12, wobei das selektive Durchführen eines Schadensüberwachungsvorgangs ferner Folgendes umfasst:
Inkrementieren einer Zykluszahlanzahl für ein Belastungsniveau als Reaktion darauf, dass die Struktur (30) Schwankungen auf dem Belastungsniveau erfährt, wenn die erste Schadensvorhersage keinen Schaden vorhersagt und die zweite Schadensvorhersage keinen Schaden vorhersagt.

14. Verfahren nach einem der Ansprüche 1 bis 13, ferner Folgendes umfassend:

Durchführen einer ersten Schätzung der Rissgröße durch Bezugnahme auf eine Schadensdatenbank als Reaktion darauf, dass die erste Schadensvorhersage Schaden vorhersagt;
Durchführen einer zweiten Schätzung der Rissgröße basierend auf Daten von der Vielzahl von Schadenssensoren als Reaktion darauf, dass die erste Schadensvorhersage Schaden vorhersagt;

Auswählen der zweiten Schätzung der Rissgröße als endgültige Schätzung der Rissgröße, wenn ein Unterschied zwischen der ersten Schätzung der Rissgröße und der zweiten Schätzung der Rissgröße einen Schwellenwert übersteigt; und

Auswählen eines Durchschnitts der ersten Schätzung der Rissgröße und der zweiten Schätzung der Rissgröße als endgültige Schätzung der Rissgröße, wenn ein Unterschied zwischen der ersten Schätzung der Rissgröße und der zweiten Schätzung der Rissgröße keinen Schwellenwert übersteigt.

**Revendications**

1. Procédé comprenant :

   la réalisation d'une première prédiction de dégâts avec un modèle de calcul en utilisant au moins les données d'une multitude de capteurs de dégâts montés sur une structure (30), la multitude de capteurs de dégâts comprenant une multitude de capteurs de dégâts locaux appliqués à la structure (30) et une multitude de capteurs de dégâts globaux appliqués à la structure (30), les capteurs de dégâts étant configurés pour détecter un écart dans une structure (30) par rapport à sa configuration d'origine et/ou pour produire un signal qui peut être utilisé pour détecter l'écart ;
   la réalisation d'une seconde prédiction de dégâts avec le modèle de calcul en utilisant au moins les données d'une multitude de capteurs de charge (17) associés à la structure (30), la multitude de capteurs de charge (17) comprenant au moins un des capteurs de charge physiques (18) montés sur la structure (30) et configurés pour détecter des charges dans une structure (30) ou des capteurs de charge virtuels (20) correspondant à un modèle de calcul associé à la structure (30) et configurés pour estimer une charge appliquée sur la base de paramètres d'état ; et
   la réalisation de manière sélective d'une action de surveillance des dégâts en réponse à la première prédiction de dégâts et à la seconde prédiction de dégâts afin de déterminer une santé structurelle ;
   l'identification des zones de la structure (30) où des dégâts sont susceptibles de se produire dans des conditions de fonctionnement ;
   le montage d'une première quantité de la multitude de capteurs de dégâts locaux dans les zones où des dégâts sont susceptibles de se produire ; et
   le montage d'une seconde quantité de la multitude de capteurs de dégâts globaux sur une pluralité d'emplacements sur une grande surface de la structure (30), la seconde quantité étant supérieure à la première quantité.

2. Procédé selon la revendication 1, comprenant en outre :
   la prédiction d'une santé structurelle de la structure (30) en réponse à la première prédiction de dégâts et à la seconde prédiction de dégâts, la santé structurelle comprenant au moins l'un parmi la comparaison d'un indice de dégâts cumulatif à un seuil prédéterminé, la comparaison d'une taille de fissure estimée à une taille de fissure critique et la comparaison d'un nombre de cycles expérimenté à un nombre maximal de cycles autorisé.

3. Procédé selon la revendication 1 ou 2, comprenant en outre :
   la mise à jour du modèle de calcul sur un ordinateur en utilisant au moins les données de la première multitude de capteurs de charge (17) et en utilisant les données de la seconde multitude de capteurs de dégâts, dans lequel le modèle de calcul est stocké en mémoire sur un ordinateur.

4. Procédé selon l'une quelconque des revendications 1 à 3, comprenant en outre :

   la réception des données de la première multitude de capteurs de dégâts ; et
   la fusion des données de la multitude de capteurs de dégâts locaux et de la multitude de capteurs de dégâts globaux pour former un ensemble de données de dégâts stocké en mémoire en communication avec l'ordinateur.

5. Procédé selon l'une quelconque des revendications 1 à 4, comprenant en outre :
   la réception des données de la seconde multitude de capteurs de charge (17), la seconde multitude de capteurs de charge (17) incluant au moins les capteurs de charge physiques (18) .

6. Procédé selon l'une quelconque des revendications 1 à 5, dans lequel ladite réalisation d'une première prédiction de dégâts comprend :

   le traitement des données de la multitude de capteurs de dégâts ; et

la détermination de la formation d'une fissure sur la structure (30) en utilisant les données traitées.

7. Procédé selon l'une quelconque des revendications 1 à 6, dans lequel ladite réalisation d'une seconde prédiction de dégâts comprend :

le traitement des données de la multitude de capteurs de charge (17) ; et
la détermination du fait qu'une charge détectée qui est détectée ou non par la multitude de capteurs de charge (17) dépasse une charge maximale pour la structure (30).

8. Procédé selon l'une quelconque des revendications 1 à 7, dans lequel ladite réalisation d'une seconde prédiction de dégâts comprend en outre :

le calcul d'un indice de dégâts cumulatif en réponse à une charge détectée qui ne dépasse pas une charge maximale ; et
la détermination du fait que l'indice de dégâts cumulatif est supérieur ou égal à une valeur seuil.

9. Procédé selon la revendication 8, dans lequel ledit calcul d'un indice de dégâts cumulatif comprend :

l'incrémentation d'un nombre de comptage de cycles pour un niveau de tension en réponse à l'identification du fait que la structure (30) a subi des oscillations au niveau de tension ;
le calcul d'un rapport entre un nombre de cycles expérimenté et un nombre de cycles maximal admissible prédéterminé pour chaque niveau de tension subi par la structure (30) ; et
le calcul d'une somme des rapports pour chacun des niveaux de tension pour calculer un indice de dégâts cumulatif.

10. Procédé selon l'une quelconque des revendications 1 à 9, dans lequel ladite réalisation sélective d'une action de surveillance des dégâts comprend l'estimation d'une taille initiale de la fissure calculée à partir des données reçues des capteurs de dégâts et le suivi de la croissance de la fissure en réponse à la taille initiale de la fissure si la première prédiction de dégâts prédit les dégâts et la seconde prédiction de dégâts prédit les dégâts.

11. Procédé selon l'une quelconque des revendications 1 à 10, dans lequel ladite réalisation sélective d'une action de surveillance des dégâts comprend le suivi de la croissance de la fissure et le référencement d'une taille initiale de la fissure à partir d'une base de données de dégâts si la première prédiction de dégâts prédit les dégâts et la seconde prédiction de dégâts ne prédit pas les dégâts.

12. Procédé selon l'une quelconque des revendications 1 à 11, dans lequel ladite réalisation sélective d'une action de surveillance des dégâts comprend en outre :

l'incrémentation d'un nombre de comptage de cycles pour un niveau de tension en réponse à la structure (30) subissant des oscillations au niveau de tension si la première prédiction de dégâts ne détecte pas de prédiction et la seconde prédiction de dégâts prédit les dégâts ; et
la diminution proportionnelle de la taille de la fissure estimée sur la base d'un indice de dégâts cumulatif si la première prédiction de dégâts ne détecte pas la prédiction et la seconde prédiction de dégâts prédit les dégâts.

13. Procédé selon l'une quelconque des revendications 1 à 12, dans lequel ladite réalisation sélective d'une action de surveillance des dégâts comprend en outre :
l'incrémentation d'un nombre de comptage de cycles pour un niveau de tension en réponse à la structure (30) subissant des oscillations au niveau de tension si la première prédiction de dégâts ne prédit pas les dégâts et la seconde prédiction de dégâts ne prédit pas les dégâts.

14. Procédé selon l'une quelconque des revendications 1 à 13, comprenant en outre :

la réalisation d'une première estimation de la taille de la fissure en référençant une base de données de dégâts en réponse à la première prédiction de dégâts prédisant des dégâts ;
la réalisation d'une seconde estimation de la taille de la fissure sur la base des données de la multitude de capteurs de dégâts en réponse à la première prédiction de dégâts prédisant des dégâts ;
la sélection de la seconde estimation de la taille de la fissure en tant qu'estimation finale de la taille de la fissure si la différence entre la première estimation de la taille de la fissure et la seconde estimation de la taille de la fissure dépasse un seuil ; et
la
sélection
d'une moyenne de la première estimation de la taille de la fissure et de la seconde taille de la fissure en tant qu'estimation finale de la fissure si la différence entre la première estimation de la taille de la fissure et la seconde estimation de la taille de la fissure ne dépasse pas un seuil.

FIG.1

EP 2 199 788 B1

**FIG.2A**

**FIG.2B**

LOCAL DAMAGE
SENSOR (12)

GLOBAL DAMAGE
SENSOR (14)

PHYSICAL LOAD
SENSOR (18)

VIRTUAL LOAD
SENSOR (20)

RIVET (40)

**FIG.3**

FIG.4

EP 2 199 788 B1

128

ACTION 1
130 — PERFORM CRACK GROWTH TRACKING (STEP 142) USING AN ESTIMATED INITIAL CRACK SIZE CALCULATED FROM DAMAGE SENSOR DATA

YES

DI>=1
?

124 — NO

132 —

ACTION 2
PERFORM CRACK GROWTH TRACKING (STEP 142) USING AN INITIAL CRACK SIZE FROM DAMAGE DATABASE

YES

DAMAGE DETECTED FROM DAMAGE SENSORS ?

106 —

NO

134 —

ACTION 3
INCREMENT CYCLE COUNT (STEP 118), AND PROPORTIONALLY DECREASE ESTIMATED CRACK SIZE BASED ON CUMULATIVE DAMAGE INDEX

YES

DI>=1
?

124 — NO

**FIG.5**

136 —

ACTION 4
INCREMENT CYCLE COUNT (STEP 118)

**FIG.6**

CRACK SIZE ESTIMATE
(STEP 148)

CRACK SIZE ESTIMATE
(STEP 144)

150

152 — CALCULATE DIFFERENCE
BETWEEN CRACK SIZE
ESTIMATES

YES

DIFF. >= THRESHOLD
?

154

NO

SELECT ESTIMATE FROM
DAMAGE SENSORS
(STEP 148)

156

AVERAGE THE DAMAGE
ESTIMATES

158

FINAL CRACK
SIZE ESTIMATE

160

<u>FIG.7</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006005960 A1
- US 20060069520 A1
- US 20080167833 A1
- US 7286964 B